Europäisches Patentamt

European Patent Office

Office européen des brevets

(11) Publication number: **0 099 343**
**B1**

# EUROPEAN PATENT SPECIFICATION

(45) Date of publication of patent specification: **26.02.86**

(51) Int. Cl.⁴: **B 29 B 7/56**

(21) Application number: **83830141.4**

(22) Date of filing: **11.07.83**

(54) **Open mixer for the processing of rubber and plastics, provided with an additional roll.**

(30) Priority: **12.07.82 IT 2235782**

(43) Date of publication of application:
**25.01.84 Bulletin 84/04**

(45) Publication of the grant of the patent:
**26.02.86 Bulletin 86/09**

(84) Designated Contracting States:
**AT CH DE FR GB LI NL SE**

(56) References cited:
**DD-A- 128 195**
**DE-B-2 260 565**

(73) Proprietor: **RUTIL S.r.l.**
**Via Raffaello Sanzio**
**Lonate Ceppino (IT)**

(72) Inventor: **Coscia, Giovanni A.**
**Via Casluncio, 16**
**Varese (IT)**

(74) Representative: **Adorno, Silvano et al**
**c/o SOCIETA' ITALIANA BREVETTI S.p.A.**
**Via Carducci, 8.**
**I-20123 Milano (IT)**

Courier Press, Leamington Spa, England.

## Description

The present invention deals with an open-type mixer for rubber and plastics processing, which is provided with an additional roll.

It is known that open mills or mixers are essential in the processing of rubber and plastic material to obtain mixes with the desired compound and degree of homogeneity and temperature. They may be used either as a first stage of processing, as they receive the mix components directly from a hopper, or as second stage downstream of a closed Banbury-type mixer, in which case they have also a cooling function. Inside thereof in fact a cooling fluid flows, usually water.

It is however known that these prior art mixers comprising two co-operating rolls require a number of subsequent passages of the same compound batch, before the latter can be considered ready to be used in a rubber moulding press. Furthermore, if the compound batch has already passed upstream through a closed mixer, in any case a multiplicity of passes will be necessary to reduce the mix temperature. In order to reduce the working time, it would be possible to cause the same compound batch to pass subsequently through at least a second open mixer, operating in series with the first one, but the costs and dimensions involved would be excessive, thus seriously affecting the overall economy of the process.

It has now been conceived, and forms the object of the present invention, to provide an improved open mixer which comprises a third roll, substantially positioned under the other two, therefore such as to increase the overall dimensions of the mixer in height direction only. With such an additional cylinder the compound processing and the desired temperature are obtained in a substantially shorter time, thus with a considerable increase of the production per hour in comparison with the conventional two roll-mixers.

The mixer according to the present invention comprises two internally cooled rolls which are rotatable about two horizontal and parallel axes, at least one of which can be adjusted as to the distance thereof from the axis of the other roll, possibly mutually engaging along a pair of cylinder generating lines, and is characterized by comprising a third roll also having a horizontal rotation axis, parallel and positioned at a lower height than the other two rolls, this roll also being internally cooled and provided with approach means and adjusting means for a fine adjustment of the distance from one of said upper rolls, possibly engaging with the latter along a pair of cylinder generating lines, the three rolls being all independently motor-driven, whereby the rolls of each pair of rolls capable of mutual engagement have an opposite direction of rotation and the roll having the lowest peripheral speed is one of the two upper rolls.

According to a particular aspect of the present invention the axes of the two upper rolls are positioned on a plane inclined to the horizontal and the one mounted at a lower level of the two can come into contact with the third roll. Furthermore, in a cross-section view, the angle between the lines joining the centre of the roll engageable with the other two and the centre of the other two rolls, is comprised between 60° and 120° and preferably from 80° to 90°.

Again preferably said intermediate roll will be the one on which the mix sheet is formed and therefore the roll provided with the lowest peripheral speed.

Further features and advantages of the present invention will be clear to those skilled in the art from the following detailed description of an embodiment thereof, given by way of example with reference to the accompanying drawings wherein:

*Figure 1* is a side end view of the mixer according to the invention;

*Figure 2* is a diagrammatic cross-sectional view taken in an intermediate position along the three rolls; and

*Figure 3* is a partial cross-sectional view along the line III—III of Fig. 1.

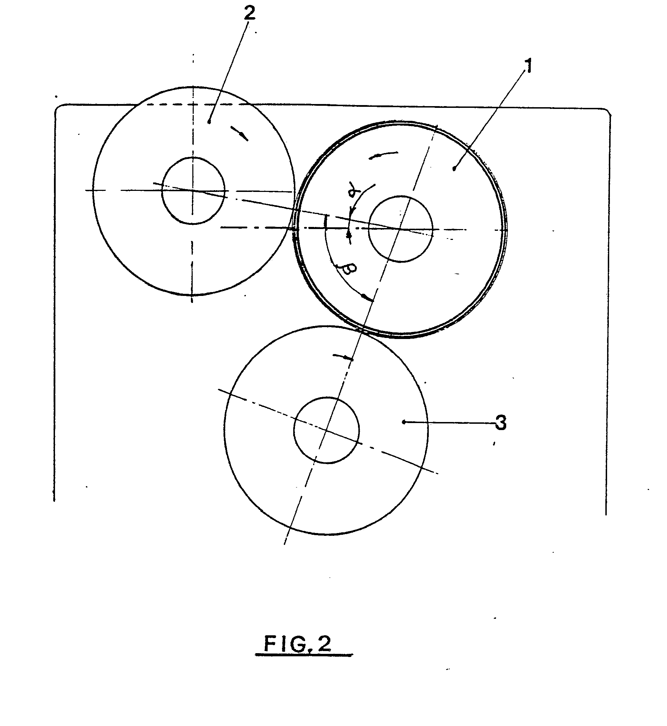

With reference to the drawings, the mixer according to the present invention comprises, in addition to the two upper rolls 1 and 2 being mutually parallel and mounted with horizontal axes, a third roll 3 mounted at a lower height than the other two. Preferably, according to the invention, the rolls 1 and 2 are positioned at different heights, the plane comprising their axes being inclined to the horizontal by an angle α having preferably a value between 7 and 10°, as is better seen in Fig. 2, which shows the geometry of their placement, in such a way that the roll 2 is mounted at a higher level than the roll 1.

The latter, as it is known, has quick approach means in relationship with the fixedly mounted roll 2 e.g. formed as a cylinder and piston 4, as well as adjusting means for a fine adjustment of the distance, such as of the screw-type, not shown in the drawing.

The third additional roll 3 is mounted under the other two also on quick approach means as cylinder and piston 5, being similar to the means 4 of roll 1. The adjustment of the distance between roll 3 and roll 1, until possibly coming into contact along a generating line of each roll, is again controlled by a fine adjustment device, such as of the screw type, also not shown like that for adjusting the distance between rolls 1 and 2. In this way the three rolls may be mutually engaged in pairs and in the shown embodiment the intermediate roll 1 engages the other two rolls.

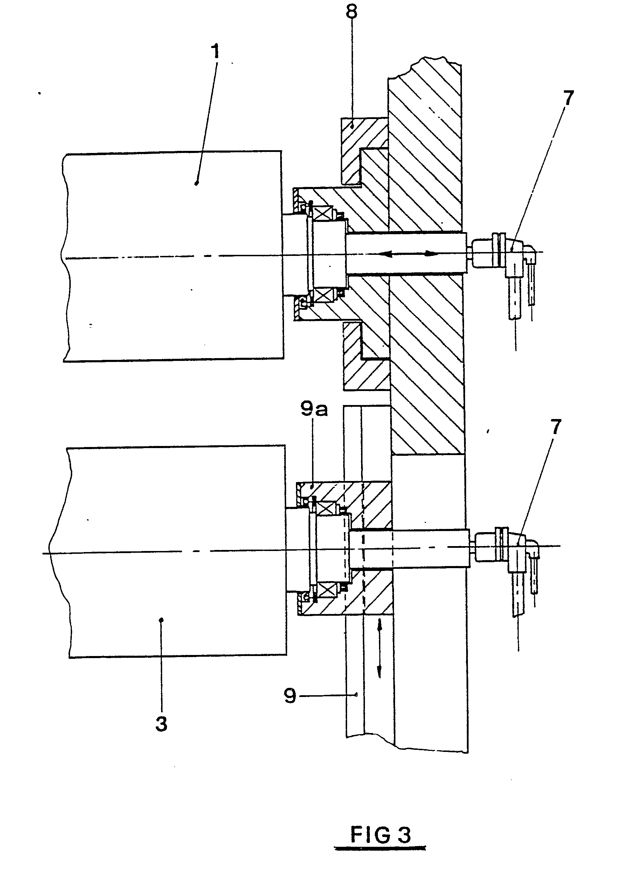

With reference to Fig. 2, if the cross-section centres of the three rolls are joined together, a triangle is obtained wherein the angle β corresponding to the centre of roll 1 is, according to the invention, in the range between 60° and 120° and preferably between 80° and 90°. These values of angle β correspond to a more advantageous positioning of the roll 3 to accomplish the mixer action both for a better homogenization of the mix components and for a quick cooling when the material to be processed is fed from a first closed mixer, where its temperature has increased. All the three rolls are in fact run across, in a known manner, by the flow of a cooling fluid, such as water, through pipe fittings 7 (Fig. 3).

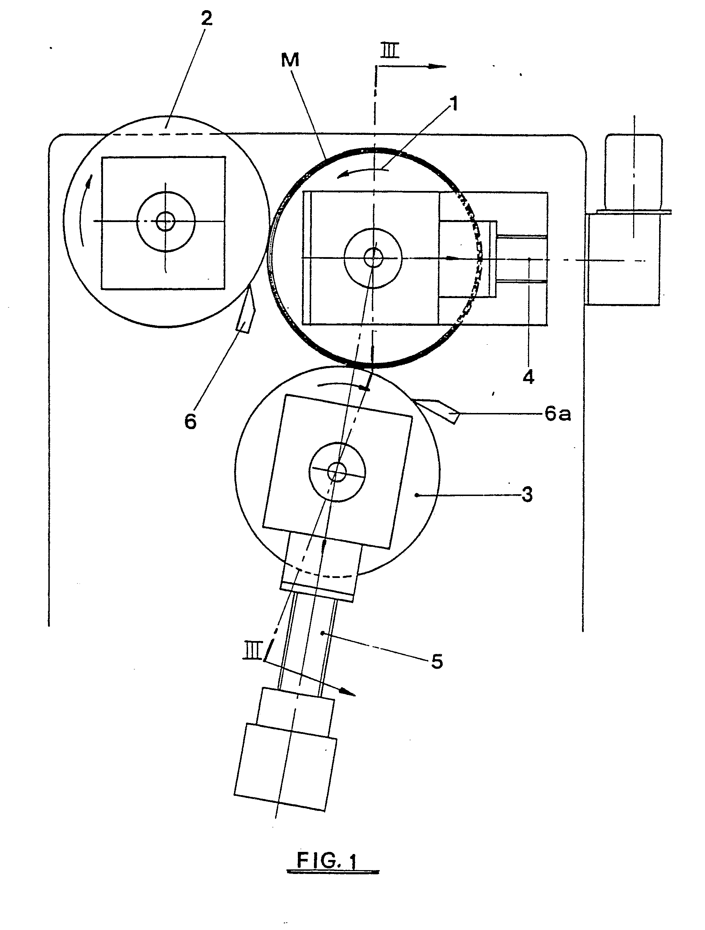

As shown in Fig. 1, the intermediate roll 1 is that on which the mix sheet M is formed, whose thickness will be a function of the nip distance existing between this roll and the other two and is adjustable, as previously described, by means of screw devices associated with the quick approach means 4 and 5. Two scrapers 6, 6a are provided on the other two rolls and mounted slightly downstream of the zone of contact with the intermediate roll 1, when considering the rotation directions as indicated on the drawing.

It should be appreciated that at the nip or contact point between two rolls, the movement of their periphery will be in the same direction, since the rotations of two mutually co-operating rolls are of opposite direction, whereas are the same for the rolls 2 and 3 which are spaced apart.

As the compound to be processed is fed from the top to the nip zone between rolls 1 and 2, it is obvious that these will have the directions of rotation shown in the drawing, namely counterclockwise for the roll 1 and clockwise for the roll 2, so that the compound then passes through the nip zone between the intermediate roll 1 and the additional roll 3, this latter having again a clockwise direction of rotation.

As to the speed, the roll on which the sheet of mix is being formed (the intermediate roll 1 in this case) will have the lowest peripheral speed, whereas the other two will have slightly higher peripheral speeds to give the compound a certain amount of rub. This amount shall be greater for the first roll which comes into contact with the sheet of compound and smaller for the other roll, that is the additional roll 3. Therefore this latter will have preferably a peripheral speed comprised between the slowest one of roll 1 (of the order of 15 rpm) and the faster speed of roll 2. Should the rolls have all the same diameter, one can make mention of rotational speed instead of peripheral speed.

It is obvious that if the device is in a completely retreated position, so as to allow no possibility for the compound to be processed in the nip between the rolls 1 and 3, the mixer would operate again conventionally with two rolls.

With reference to Fig. 3, the mounting details, although diagrammatic, of the two rolls 1 and 3 are shown. The first one can slide with a reciprocating horizontal motion, being thrusted by the cylinder-piston 4, here not shown, along guides 8 and integrally with the pipe fitting 7 for feeding the coolant fluid. The additional roll 3 can instead slide vertically or in an inclined direction having a substantial vertical component, being also integral with the associate fitting 7, along the guide 9, as urged by the thrust of the cylinder-piston 5, not shown here, but fixed to the sliding block 9a.

## Claims

1. Open-type mixer for processing rubber and plastic material, comprising two internally cooled rolls (1, 2) which are rotatable about horizontal and parallel axes, at least one of which (1) can be adjusted as to the distance thereof from the axis of the other roll (2), until possibly engaging it along a pair of cylinder generating lines, characterized by comprising a third roll (3) also having a horizontal rotation axis which is parallel and positioned at a lower height than the other two rolls, this roll being also internally cooled and provided with approach means (5) and adjusting means for a fine adjustment of the distance from one of said upper rolls (1), possibly engaging the same along a pair of cylinder generating lines, the three rolls being independently motor-driven, whereby the rolls of each pair of rolls capable of mutually engagement have an opposite direction of rotation and the roll having the lowest peripheral speed is one of the two upper rolls (1, 2).

2. Open mixer according to claim 1, wherein the axes of the two upper rolls (1, 2) define a plane which is inclined to the horizontal forming an acute angle (α).

3. Open mixer according to claim 2, wherein said angle (α) is comprised in the range from 7° to 10°.

4. Open mixer according to claim 2 or 3, wherein the roll (1) mounted at a lower height of said two upper rolls is capable of coming into contact and generally cooperating with said additional roll (3).

5. Open mixer according to claim 4, wherein the plane passing along the rotation axis of said roll (1) and the rotation axis of the roll (2) forms with the plane passing along the axis of the roll (1) and the rotation axis of said roll (3) an angle (β) in the range from 60° to 120°.

6. Open mixer according to claim 5, wherein said angle (β) is within the range from 80° to 90°.

7. Open mixer according to claim 4, wherein the roll having a peripheral speed lower than each of the other two rolls and on the surface of which the mix sheet is formed, is said intermediate roll (1).

8. Open mixer according to claim 4, wherein the shaft of each movable roll (1, 3) is fixed to the associate cooling fluid feed fitting (7) and is slidable along respectively horizontal (8) and substantially vertical (9) guides.

## Patentansprüche

1. Offenes Mischgerät zum Gummi- und Kunststoffverarbeiten, mit zwei innengekühlten Walzen (1, 2), welche drehbar um parallele, horizontale Achsen angeordnet sind, wobei wenigstens der Abstand einer der Walzen (1) gegenüber der Achse der anderen Walze (2) eingestellt werden kann bis zu einer möglichen Anlage längs eines Paares von Zylinder erzeugenden Linien, dadurch gekennzeichnet, daß eine dritte Walze (3) vorgesehen ist, die ebenfalls eine horizontale Drehachse aufweist, die parallel zu den anderen Walzen und in geringerer Höhe als die beiden anderen Walzen angeordnet ist, daß diese Walze ebenfalls innen gekühlt wird und mit einer Positioniereinrichtung (5) und einer Einstelleinrichtung zur Feineinstellung des Abstandes von einer der oberen Walzen (1) bis zu einer möglichen Anlage an dieser längs eines Paares von zylindererzeugenden Linien versehen ist, daß die drei Walzen unabhängig voneinander motorangetrieben sind, wodurch die Walzen jedes Walzenpaares, die gegenseitig in Anlage bringbar sind, entgegengesetzte Drehrichtung aufweisen, und daß die Walze mit der geringsten Umfangsgeschwindigkeit eine der oberen Walzen (1, 2) ist.

2. Offenes Mischgerät nach Anspruch 1, dadurch gekennzeichnet, daß die Achsen der beiden oberen Walzen (1, 2) in einer Ebene liegen, welche unter einem Winkel α zur Horizontalen geneigt ist.

3. Offenes Mischgerät nach Anspruch 2, dadurch gekennzeichnet, daß der Winkel α im Bereich von 7° bis 10° liegt.

4. Offenes Mischgerät nach Anspruch 2 oder 3, dadurch gekennzeichnet, daß die in geringerer Höhe angeordnete Walze (1) der beiden oberen Walzen in Berührung mit der zusätzlichen Walze (3) gelangen kann und im wesentlichen mit dieser Walze (3) zusammenwirkt.

5. Offenes Mischgerät nach Anspruch 4, dadurch gekennzeichnet, daß die Ebene, die durch die Drehachsen der Walze (1) und der Walze (2) verläuft, mit der Ebene, die durch die Achse der Walze (1) und der Drehachse der Walze (3) verläuft, einen Winkel β im Bereich von 60° bis 120° einschließt.

6. Offenes Mischgerät nach Anspruch 5, dadurch gekennzeichnet, daß der Winkel β im Bereich von 80° bis 90° liegt.

7. Offenes Mischgerät nach Anspruch 4, dadurch gekennzeichnet, daß die Walze, die eine Umfangsgeschwindigkeit aufweist, die geringer ist als jede der Umfangsgeschwindigkeiten der anderen beiden Walzen, und an deren Oberfläche die vermischte Schicht gebildet wird, die dazwischenliegende Walze (1) ist.

8. Offenes Mischgerät nach Anspruch 4, dadurch gekennzeichnet, daß die Wellen jeder bewegbaren Walze (1, 3) mit dem zugehörigen Anschlußstück (7) einer Kühlflüssigkeitszufuhrleitung verbunden und in horizontalen (8) bzw. im wesentlichen vertikalen (9) Führungen verschiebbar sind.

**Revendications**

1. Mélangeur de type ouvert pour le traitement de caoutchouc et de matière plastique, comprenant deux cylindres refroidis intérieurement (1, 2) qui tournent autour d'axes horizontaux et parallèles, dont l'un au moins (1) peut être ajusté quant à sa distance à l'axe de l'autre cylindre (2), jusqu'à porter éventuellement contre lui suivant deux génératrices de cylindre, caractérisé en ce qu'il comprend un troisième cylindre (3) présentant aussi un axe de rotation horizontal qui est parallèle et placé à une moindre hauteur que les deux autres cylindres, ce cylindre étant aussi refroidi intérieurement et muni de moyens de rapprochement (5) et de moyens de réglage pour un réglage fin de la distance à l'un desdits cylindres supérieurs (1), portant éventuellement contre eux suivant deux génératrices de cylindre, les trois cylindres étant entraînés par moteur indépendamment, de sorte que les cylindres de chaque paire de cylindres capable d'entrer en contact mutuel présentent un sens de rotation opposé et que le cylindre ayant la plus faible vitesse périphérique est l'un des deux cylindres supérieurs (1, 2).

2. Mélangeur ouvert selon la revendication 1, dans lequel les axes des deux cylindres supérieurs (1, 2) définissent un plan qui est incliné sur l'horizontale faisant un angle aigu (α).

3. Mélangeur ouvert selon la revendication 2, dans lequel ledit angle (α) est compris dans la gamme de 7° à 10°.

4. Mélangeur ouvert selon la revendication 2 ou 3, dans lequel le cylindre (1) monté à une moindre hauteur que les deux susdits cylindres supérieurs est capable d'entrer en contact et de coopérer d'une manière générale avec ledit cylindre supplémentaire (3).

5. Mélangeur ouvert selon la revendication 4, dans lequel le plan passant par l'axe de rotation dudit cylindre (1) et par l'axe de rotation du cylindre (2) fait avec le plan passant par l'axe de rotation du cylindre (1) et par l'axe de rotation dudit cylindre (3) un angle (β) compris entre 60° et 120°.

6. Mélangeur ouvert selon la revendication 5, dans lequel ledit angle (β) est compris entre 80° et 90°.

7. Mélangeur ouvert selon la revendication 4, dans lequel le cylindre ayant une vitesse périphérique plus faible que chacun des deux autres cylindres et sur la surface duquel est formée la feuille de mélange, est ledit cylindre intermédiaire (1).

8. Mélangeur ouvert selon la revendication 4, dans lequel l'arbre de chaque cylindre mobile (1, 3) est fixé au raccord d'amenée de fluide de refroidissement associé (7) et peut coulisser le long de guides respectivement horizontaux (8) et pratiquement verticaux (9).

FIG. 1

**FIG. 2**

FIG 3